Europäisches Patentamt

European Patent Office

Office européen des brevets

(11) Publication number: **0 157 342**
A2

## (12) EUROPEAN PATENT APPLICATION

(21) Application number: 85103572.5

(51) Int. Cl.⁴: **G 06 F 12/06**

(22) Date of filing: 26.03.85

(30) Priority: 29.03.84 JP 59643/84

(43) Date of publication of application: 09.10.85
Bulletin 85/41

(84) Designated Contracting States: **DE FR GB NL**

(71) Applicant: **Ascii Corporation, Sumitomominamiaoyama
Bldg. 11-5, Minamiaoyama 5-chome, Minato-ku Tokyo
(JP)**

(72) Inventor: **Ishii, Takatoshi, 23-6 Imai 3-chome, Oome-shi
Tokyo (JP)**
Inventor: **Yamashita, Ryozo, Room 401,
Beruwuddoyamato 672, Mizonokuchi, Takatu-ku
Kawasaki-shi Kanagawa (JP)**

(74) Representative: **Lehn, Werner, Dipl.-Ing. et al, Hoffmann,
Eitle & Partner Patentanwälte
Arabellastrasse 4 (Sternhaus), D-8000 München 81 (DE)**

(54) Memory address expansion system.

(57) An improved memory address expansion system is dis-
closed which provides for easy memory control by software
and for smooth control of an ROM cartridge when it is insert-
ed, also which can be used in common in various kinds of
systems including large-/small-configuration systems. In
this memory address expansion system, there are estab-
lished a plurality of pages each consisting of 16K bytes con-
tained in a memory address space, there are established a
plurality of primary slots each consisting of four such pages,
and there can be established a plurality of secondary slots,
there being four for each primary slot, so that a slot to be
used can be specified for each of these pages, by using se-
lection means (14, 21).

0157342

# MEMORY ADDRESS EXPANSION SYSTEM

## BACKGROUND OF THE INVENTION

### 1. Field of the Invention

The present invention relates to a microprocessor having combined functions and, in particular, to a memory address expansion system.

### 2. Description of the Prior Art

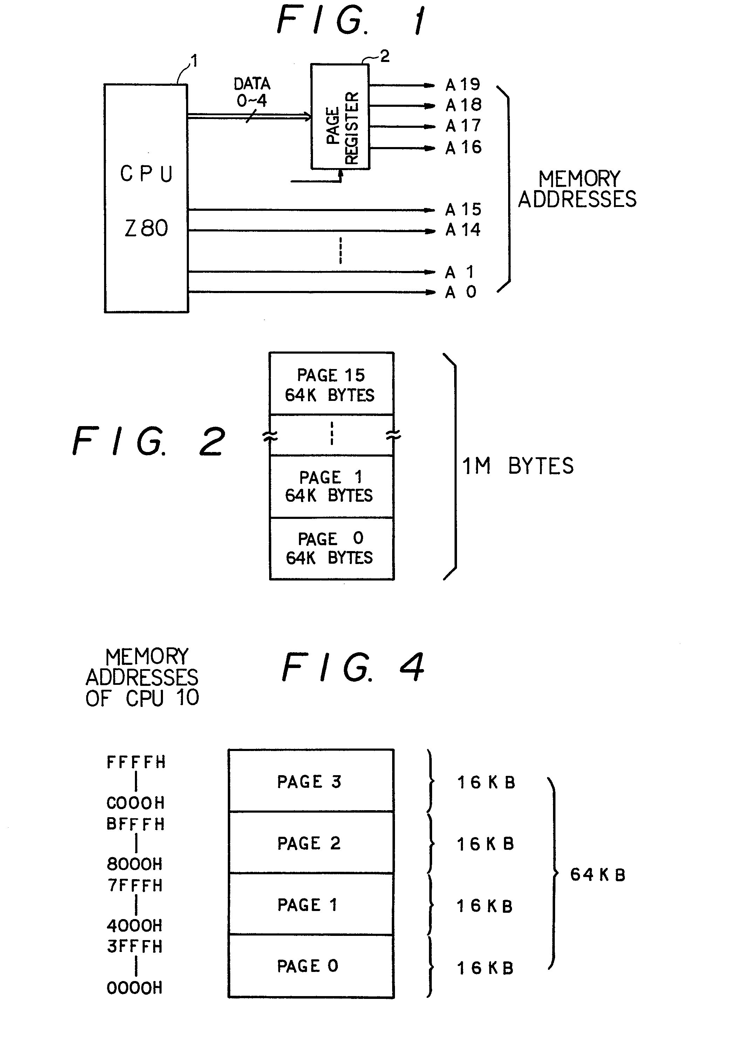

Conventionally, 8-bit microprocessors are very often employed in microcomputers and personal computers, and some of the microprocessors (a microprocessor is called CPU hereinafter) such as "8085" and "Z80" possess 16 address lines which permit memory access up to 64K bytes. In a certain computer system having a CPU, with enhancement of its function, its memory capacity has been increased over 64K bytes. In this case, of course, such system can not provide for access to all of the capacity-increased memory directly. To solve this problem, conventionally, a memory address expansion system as shown in Fig. 1 has been employed.

As can be seen from Fig. 1, in the above prior art system, there is provided a page register 2 which yields 4-bit outputs, and these 4-bit outputs are so arranged as to correspond to address lines A16 - A19, so that the number of the address lines is increased to 20. As a result of this, the memory-accessible amounts are multiplied by 16 times and thus its memory access can be expanded up to 1M bytes. Then, the 1M bytes are divided into 16 units and 64K bytes, one of the divided units, is treated as 1 page. A slot controlling table format used in the above prior art memory address expansion system is illustrated in Fig. 2.

The above-mentioned conventional memory address expansion system is simple, but it is disadvantageous in that memory control on software is complicated. Also, when a ROM cartridge is inserted into a part of memory as an option, it is found difficult to control the ROM smoothly. On the other hand, with the advancement of the LSI technology, there has been increasingly employed such a combined or complex-function CPU as formed by combining the CPU itself and its peripheral circuit elements into one IC package. In other words, there arises a new and urgent need for development of a new memory address expansion system which can be applied in common in various kinds of systems including small-configuration/large-configuration systems and the like.

- 3 -

0157342

## SUMMARY OF THE INVENTION

In view of the foregoing circumstances, the present invention aims at eliminating or at least reducing the drawbacks seen in the above-mentioned prior art system.

Accordingly, it is a main object of the present invention to provide an improved memory address expansion system which provides for an easy memory control on software as well as a smooth control of an ROM cartridge when inserted, and also which can be used commonly in various kinds of computer systems such small-/large-configuration systems.

To attain this object, according to the invention, a plurality of pages each consisting of 16K bytes in a memory address space are established, a plurality of primary slots each consisting of four of these pages are established, and a plurality of secondary slot groups each consisting of four of these primary slots can be established, whereby a slot to be used can be specified for each of the pages.

The above and other objects and advantages of the invention will become more apparent upon reading of the following detailed description and appended drawings.

## BRIEF DESCRIPTION OF THE DRAWINGS

Fig. 1 is a block diagram of a conventional memory address expansion system;

Fig. 2 is a view of a slot controlling table format employed in the above conventional memory address expansion system;

Fig. 3 is a block diagram of an embodiment of the invention, illustrating select signal generator circuits of the invention;

Fig. 4 is a view of the configurations of the pages employed in the invention;

Fig. 5 is a schematic view of primary and secondary slots employed in the invention;

Fig. 6 is a view of a format employed for the primary slot expansion register of the present invention;

Fig. 7 is a view of a format employed for the secondary slot expansion register of the invention; and

Fig. 8 is a view of a slot controlling table format employed in the present invention.

## DETAILED DESCRIPTION OF A PREFERRED
## EMBODIMENT OF THE PRESENT INVENTION

First, in the illustrated preferred embodiment of the invention, there are set up a plurality of pages each of which consists of 16K bytes as one unit in a memory address space. Then, a plurality of primary slots each consisting of four such pages (namely, pages 0 - 3) are set up, and a plurality of secondary slot groups each consisting of four such slots (namely, primary slots #0 - #3) are set up. In particular, for example, for a primary slot #0, there are present four such secondary slots, #00 - #03.

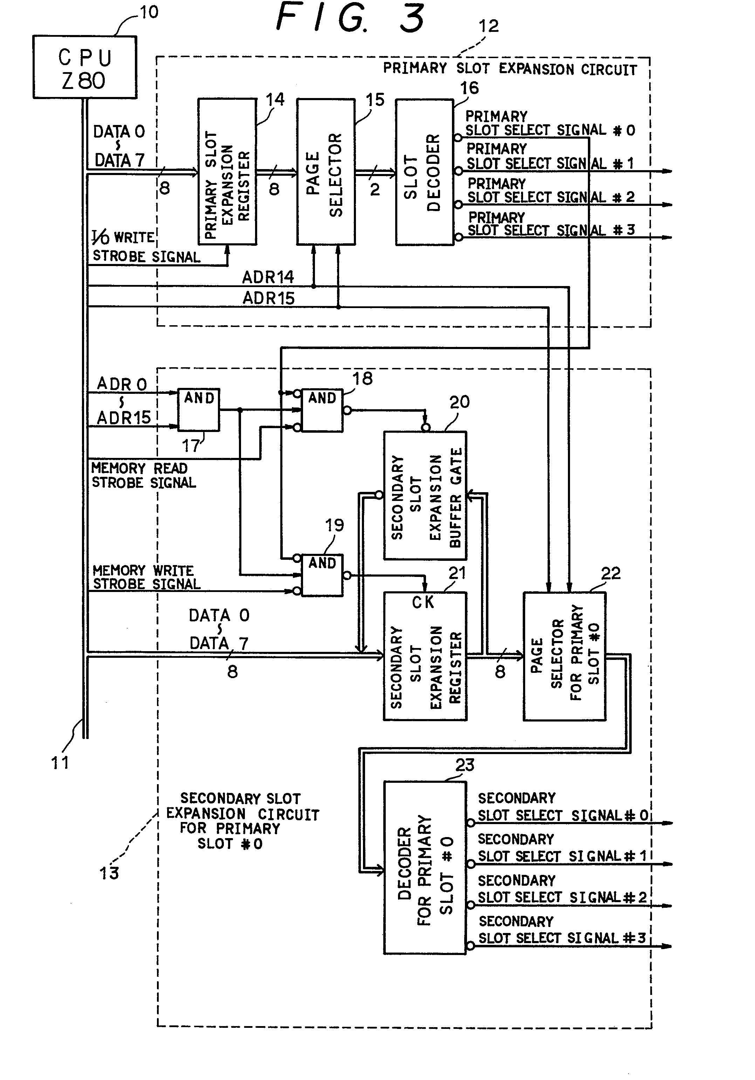

Now Fig. 3 shows a block diagram to illustrate a slot select signal generation circuit which is used to select the above-mentioned slots. This slot select signal generation circuit is necessary for "slot control" that is an important feature of the invention.

In Fig. 3, CPU (Z80) 10 is an 8-bit microprocessor, which is capable to transmit and receive various signals by means of an address/data/control bus line 11.

As shown in Fig. 3, there are provided a primary slot expansion circuit 12 and a secondary slot expansion circuit 13 for primary slot #0; the former circuit selects one out of the four primary slots #0 - #3, and the latter selects one out of the four secondary slots #00 - #03. These two slot expansion circuits 12 and 13, together with CPU 10, are incorporated into one package.

Primary slot expansion circuit 12 includes a primary slot expansion register 14, a page selector 15 and a slot decoder 16. Primary slot expansion register 14 holds the primary slot expansion data transmitted by CPU 10. Page selector 15 selects a predetermined page and slot decoder 16 generates primary slot select signals #0 - #3.

Secondary slot expansion circuit 13 for primary slot #0 is provided with a secondary slot expansion register 21, a secondary slot expansion buffer gate 20, AND gates 17, 18, 19, a page selector 22 for primary slot #0, and a decoder 23 for primary slot #0.

Secondary slot expansion register 21 holds secondary slot expansion data. Secondary slot expansion buffer gate 20 reads secondary slot expansion data existing in the secondary slot expansion register 21. AND gate 17 controls the operation of both gates 18 and 19, and AND gates 18, 19 control the read/write operations of the buffer gate 20 and the secondary slot expansion register 21, respectively. Page selector 22 for primary slot #0 selects the correct page of the selected secondary slot. Also, the decoder 23 for primary slot #0 generates secondary slot select signals #00 - #03.

Next, we will describe the operation of the above-mentioned embodiment of the invention.

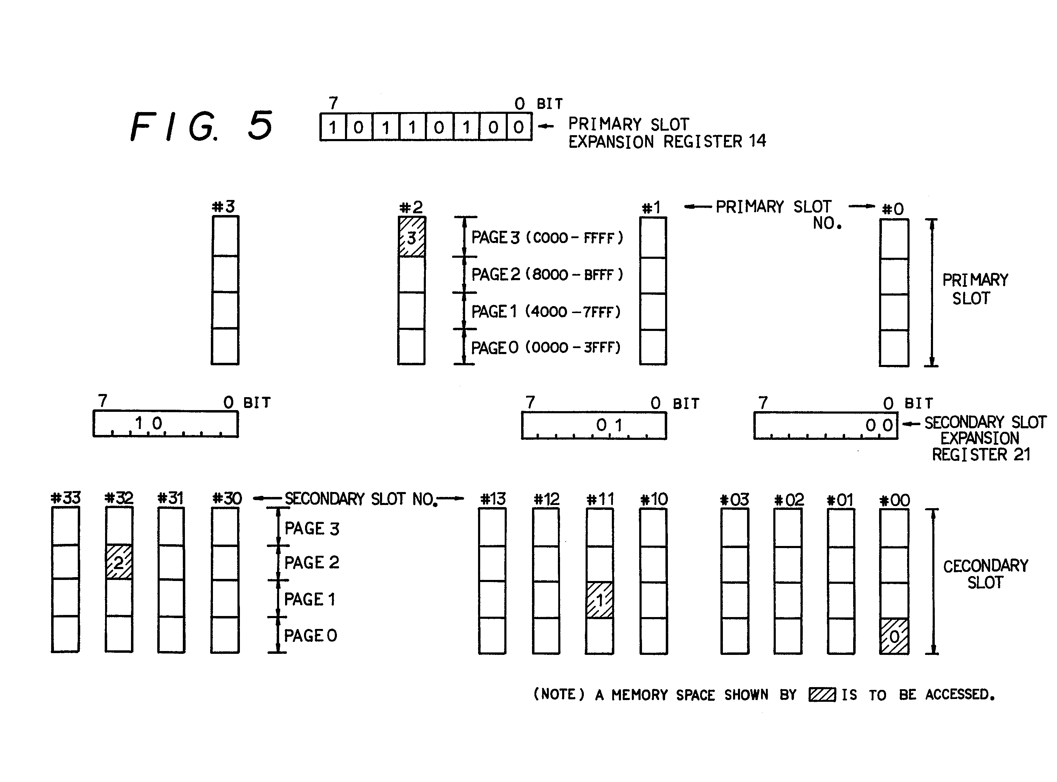

Fig. 4 illustrates the configuration of the pages which are employed in the illustrated embodiment.

As described before, 64K bytes in CPU 10 memory address space are composed of four pages 0 - 3 each of which consists of 16K bytes as one unit.

In other words, CPU 10 memory address space 64K bytes are divided into four pages,  or, page 0(0000H - 3FFFFH addresses), page 1 (4000H - 7FFFFH addresses), page 2 (8000H - BFFFH addresses), and page 3 (C000H - FFFFH ad- dresses), each of which is composed of 16K bytes.  Also, primary slot expansion register 14 is operated to expand each of these pages into corresponding pages of four primary slots #0 - #3 each of which is composed of 64K bytes as one unit.  As a result of this, the memory address space is expanded to 256K bytes by the following equation:

64K bytes x 4 = 256K bytes

In addition, each of these four primary slots #0 - #3 can be expanded by the secondary slot expansion register 21 to provide four secondary slots.  Thus, the memory address space can be expanded up to 1M bytes in the largest configuration by the following calculation:

64K bytes  x  4  x  4   =  1M bytes

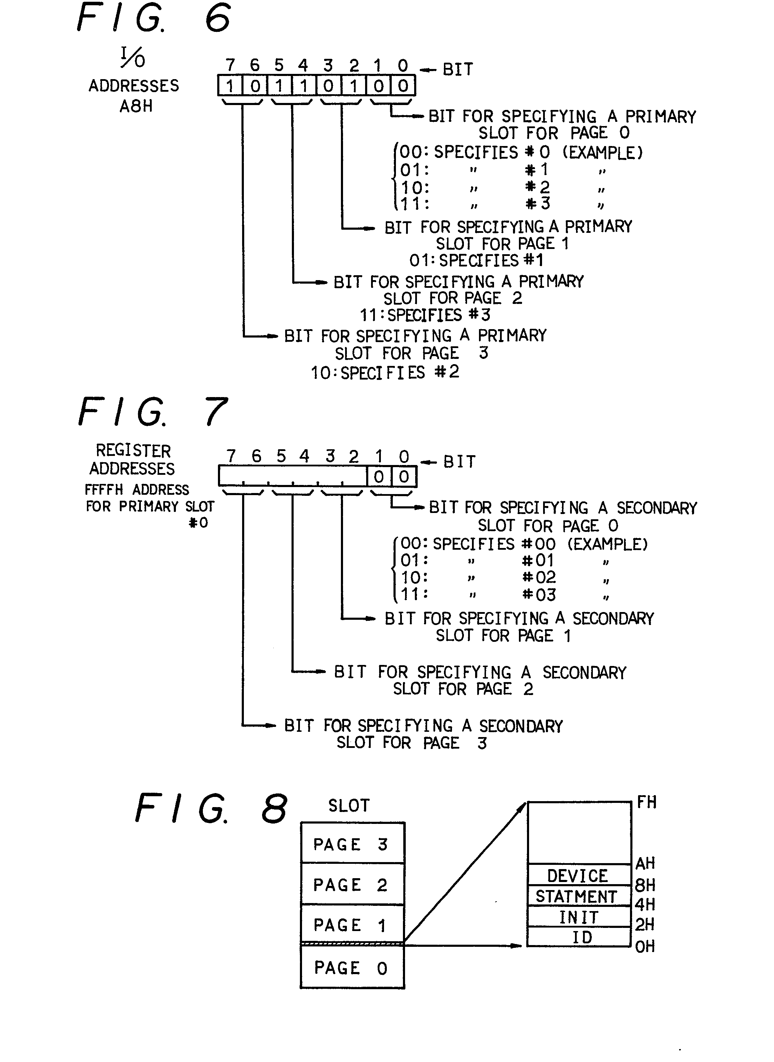

Fig. 6 illustrates a format that is employed in the primary expansion register 14 contained in the primary slot expansion circuit 12.

In the format of Fig. 3,  bits 0, 1 are used to specify which of the four primary slots #0 - #3 is to be allocated for page 0 of the CPU 10 memory address space.  In the illustrated example, bit 0 = "0" and bit 1 = "0", so that primary slot #0 is to be used for this purpose.  In this example, similarly, for page 1 of the CPU 10 memory address space the primary slot #1 is specified; for page 2 of the same, the primary slot #3 is specified; and for page 3, primary slot #2 is specified.

In other words, CPU 10 does not specify each primary slot itself, but can designate which of the primary slots (#0 - #3) as well as which of its pages are to be used for each of the CPU 10 memory address space pages.  Therefore, it can be said that the illustrated format of the invention provides a memory address expansion system  which can be used very easily in creating a program.

Secondary slot expansion register 21 is provided at the FFFFH address of the primary slot #0. It is also possible to provide secondary slot expansion registers at the respective FFFFH addresses of the primary slots #1 - #3. When there is no need to expand the secondary slots, none of these secondary slot expansion registers are provided and the FFFFH addresses is used as ordinary memories.

Fig. 7 illustrates a format employed in the secondary slot expansion register 21 mentioned above.

In the format of Fig. 7, bits 0, 1 in the secondary slot expansion register 21 are used to specify to which of the secondary slots #00 - #11 the page 0 (0000H - 3FFFH addresses) of the memory address space of CPU 10 is to be allocated. For example, if bit 0 = "0" and bit 1 ="0", then the page 0 of the secondary slot =00 is specified. Similarly, in accordance with the contents of bits 2, 3, a secondary slot for the page 1 is specified; in accordance with the contents of bits 4, 5, a secondary slot for the page 2 is specified; and, in accordance with the contents of bits 6, 7, a secondary slot for the page 3 is specified.

Fig. 5 illustrates an example of the operations of the above-mentioned embodiment of the invention.

In the configuration of Fig. 5, it is supposed that primary slots #0, #1, and #3 are each provided with secondary slot expansion registers, respectively, so that each of these primary slots is expanded into four secondary slots. However, primary slot #2 is composed of the primary slot #2 alone and thus there are no secondary slots for it.

In Fig. 5, the data for the primary slot expansion register 14 is considered as "1 0 1 1 0 1 0 0" and thus each of the pages is specified as follows:

Page 0 is specified as Primary slot #0

Page 1 is specified as Primary slot #1

Page 2 is specified as Primary slot #3

Page 3 is specified as Primary slot #2

Since the primary slots #0, #1, #3 are respectively provided with their associated slot expansion registers, as mentioned above, they are further specified in accordance with the data of the respective secondary slot expansion registers as follows: namely,

Page 0 specified as primary slot #0 is specified as secondary slot #00;

Page 1 specified as primary slot #1 is specified as secondary slot #11; and,

Page 2 specified as primary slot #3 is specified as secondary slot #32.

0157342

Accordingly, the final relationships between the pages and slots are as follows:

Page 0 becomes page 0 of secondary slot #00;

Page 1 becomes page 1 of secondary slot #11;

Page 2 becomes page 2 of secondary slot #32; and,

Page 3 becomes page 3 of primary slot # 2.

CPU 10 is able to reset the data of the above-mentioned primary and secondary slot expansion registers, which is advantageous in that slots to be used can be freely changed.

Now, we will describe the operation of the slot select signal generation circuit required for specification of slots in connection with Fig. 3.

In Fig. 3, the primary slot expansion circuit 12 and the secondary slot expansion circuit 13 for the primary slot #0 are incorporated into a single package in which CPU 10 is also contained. When expansion of secondary slots is needed in the primary slots #1 - #3, similar further circuits can be provided externally to expand its memory address capacity.

CPU 10 outputs the primary slot expansion data to data lines (DATAO - DATA7) and also executes an OUT instruction to I/O address A8H.

When I/O write strobe signal is outputted, output data

- 12 -

0157342

on the data lines (DATAO — DATA7) are set into the primary slot expansion register 14. Then, the 8-bit output of the primary slot expansion register 14 is inputted into the page selector 15. Page selector 15 is then operated to detect a page to be currently accessed by CPU 10 in accordance with the signals of the upper-most two lines (ADR15, ADR14) of the CPU 10 address lines, and at the same time to select two data lines in accordance with the data of the primary slot expansion register that corresponds to the data detected.

When the page detected is the page 0, a predetermined data line is selected based on the contents of the bits 0, 1 of the primary slot expansion register. The output of the page selector 15 is inputted to slot decoder 16. Then, slot decoder 16 generates one of the primary slot select signals #0 - #3 according to the signal inputted thereto. In other words, if the outputs of the page selector 15 are "LOW", "LOW", then the primary slot select #0 signal becomes "LOW" to specify the primary slot #0.

CPU 10 outputs the secondary slot expansion data for the primary slot #0 to the data lines (DATAO - DATA7) and executes a write instruction to the memory address FFFFH. In this case, the slot number of the page 3 (the page that contains the FFFFH address) has been previously set for #0.
As a result of this, the primary slot expansion circuit 12
outputs the primary slot select signal #0, AND gate 17
outputs an access signal for the FFFFH address, and AND
gate 19 creates a write strobe signal for the secondary
slot expansion register, which write strobe signal in turn
sets the secondary slot expansion data on the data lines
into the secondary slot expansion register 21.

The 8-bit output of the secondary slot expansion
register 21 is inputted into a page selector 22 for the
primary slot #0. Then, the page selector 22 for the primary
slot #0 is operated to detect a page to be currently accessed
by CPU 10 in accordance with the signals of the upper-most
two address lines (ADR15, ADR14) of CPU 10 and also to
select two data lines from the secondary slot expansion
register 21 corresponding to the page detected. Namely,
if the page detected is the page 0, then a predetermined
data line is selected based on the contents of the bits 0,
1 of the secondary slot expansion register 21.

The output of the primary slot #0 page selector 22 is
decoded by a decoder 23 for the primary slot #0 to create
the secondary slot select signals #00 - #03. If the outputs of the primary slot #0 page selector 22 are "LOW", "LOW", then the secondary slot select signal #00 becomes "LOW" to specify the secondary slot #00.

CPU 10 is able to read, by means of a secondary slot expansion buffer gate 20, the secondary slot expansion data set in the secondary slot expansion register through access to the memory address FFFFH. The data read out, however, are complementary data with respect to the data written, because the polarity of the read-out data has been inverted by the secondary slot expansion buffer gate 20. This function is used for software to check for information as to whether a secondary slot expansion circuit is incorporated. That is, a software control routine is able to check whether a secondary slot is present or not, by reading and writing the FFFFH address of the primary slot, so as to grasp the slot configuration of the whole system.

An expansion ROM package for application or an extension RAM is incorporated in a page of each slot. Thus, a slot control program grasps the contents of the ROM package by checking a slot control table shown in Fig. 8, or, in case of the RAM, recognizes the presence or absence of the RAM by means of its read/write operation.

In the contents of the above-mentioned slot control

0157342

table, pointers ID, INIT, STATEMENT, DEVICE are defined, respectively.

The slot control program, at first, reads the pointer ID of each of the pages to see whether an expected value is present or not. If the value is not the expected one, then the slot control program decides that the data or program present there belongs to the other systems than the relevent system. INIT, a pointer of an initialize routine, designates a start address of a processing program that must be run prior to the execution of the ROM package. When the initialize routine is not required, 0 is written. Then, the control program is allowed to pass to a next processing without performing an initialize processing. STATEMENT pointer expresses a start address of a STATEMENT program contained in the ROM package. DEVICE pointer denotes a start address of a DEVICE program in the ROM package. These programs are respectively system called by the slot control program in response to the demands of an application program.

These headers are capable to expand the kinds of their pointers under a promise with their control programs and thus they can be set up so as to meet the demands of the system to which they are actually applied.

As can be understood from the foregoing description, the present invention provides for an easy memory control on software, is able to smoothly control an ROM cardridge when inserted, and provides an improved memory expansion system which can be used in common in various kinds of systems including small- / large-configuration systems.

Claims:

1.  A memory address expansion system, characterized in that there are set up a plurality of pages each consisting of a predetermined number of bytes in a memory address space, there are set up a plurality of slots each consisting of a predetermined number of said pages, and there are provided means (14) for specifying a slot to be used for each of said pages, thereby expanding a memory address equivalently.

2.  A memory address expansion system, characterized by means for setting up a plurality of pages each consisting of a predetermined number of bytes in a memory address space and a plurality of primary slots each consisting of a predetermined number of said pages, and capable to set up a plurality of secondary slots each consisting of a predetermined number of said primary slots; and, means (14,21) for specifying a slot to be used for each of said pages.

3.  The memory address expansion system as set forth in Claim 2, characterized in that said predetermined number of bytes is 16K bytes, said predetermined number of said primary slots is four, and said predetermined number of said secondary slots is four.

4. The memory address expansion system as set forth in Claim 1 or 2, characterized in that said means for specifying said slot for said each page are registers (14,21) provided on a memory map, and also that there are provided circuits (20) responsive to the read operations of said registers to obtain the complements of the values previously written into said registers so as to make it possible to judge whether said registers exist on said memory map, so that said registers can specify said slot for said each page in accordance with the values read by said registers themselves.

5. A register provided on a memory map, said register being characterized in that there is provided a circuit (20) responsive to the read operation of said register to obtain the complements of the values previously written into said register so as to make it possible to judge whether said register exists on said memory map.

6. The memory address expansion system as set forth in Claim 1 or 2, characterized in that there is provided a slot control table as a header for said memory pages, and there is provided a slot control program adapted to define a given format which permits initialization and system call so that said memory address expansion system can hold its systematic integration and expandability.

7.  The memory address expansion system as set forth
in Claim 6, characterized in that there is provided an ID
byte forming a system identification code so as to be able
to identify whether a program currently present belongs to
the same system, so that said memory address expansion
system can hold its systematic integration and inter-
changeability.

0157342

# F I G. 1

0157342

DATA 0~4

CPU
Z80

PAGE REGISTER

A 19
A 18
A 17
A 16

A 15
A 14

A 1
A 0

MEMORY ADDRESSES

# F I G. 2

PAGE 15
64K BYTES

PAGE 1
64K BYTES

PAGE 0
64K BYTES

1M BYTES

MEMORY ADDRESSES OF CPU 10

# F I G. 4

FFFFH
|
C000H
BFFFH
|
8000H
7FFFH
|
4000H
3FFFH
|
0000H

PAGE 3

PAGE 2

PAGE 1

PAGE 0

16 KB

16 KB

16 KB

16 KB

64 KB

# F I G. 3

FIG. 5

(NOTE) A MEMORY SPACE SHOWN BY ▨ IS TO BE ACCESSED.

0157342

0157342

# FIG. 6

I/O
ADDRESSES
A8H

```
 7 6 5 4 3 2 1 0 ← BIT
[1|0|1|1|0|1|0|0]
```

└→ BIT FOR SPECIFYING A PRIMARY
SLOT FOR PAGE 0
$\begin{cases} 00: \text{SPECIFIES } \#0 \ (\text{EXAMPLE}) \\ 01: \quad " \qquad \#1 \qquad " \\ 10: \quad " \qquad \#2 \qquad " \\ 11: \quad " \qquad \#3 \qquad " \end{cases}$

└→ BIT FOR SPECIFYING A PRIMARY
SLOT FOR PAGE 1
01: SPECIFIES #1

└→ BIT FOR SPECIFYING A PRIMARY
SLOT FOR PAGE 2
11: SPECIFIES #3

└→ BIT FOR SPECIFYING A PRIMARY
SLOT FOR PAGE 3
10: SPECIFIES #2

# FIG. 7

REGISTER
ADDRESSES
FFFFH ADDRESS
FOR PRIMARY SLOT
#0

```
 7 6 5 4 3 2 1 0 ← BIT
[       |   |0|0]
```

└→ BIT FOR SPECIFYING A SECONDARY
SLOT FOR PAGE 0
$\begin{cases} 00: \text{SPECIFIES } \#00 \ (\text{EXAMPLE}) \\ 01: \quad " \qquad \#01 \qquad " \\ 10: \quad " \qquad \#02 \qquad " \\ 11: \quad " \qquad \#03 \qquad " \end{cases}$

└→ BIT FOR SPECIFYING A SECONDARY
SLOT FOR PAGE 1

└→ BIT FOR SPECIFYING A SECONDARY
SLOT FOR PAGE 2

└→ BIT FOR SPECIFYING A SECONDARY
SLOT FOR PAGE 3

# FIG. 8

SLOT

| |
|---|
| PAGE 3 |
| PAGE 2 |
| PAGE 1 |
| PAGE 0 |

| | |
|---|---|
| | FH |
| DEVICE | AH |
| STATMENT | 8H |
| INIT | 4H |
| ID | 2H |
| | 0H |